# EUROPÄISCHE PATENTANMELDUNG

(11) **EP 1 367 274 A2**
(43) Veröffentlichungstag der Anmeldung: **03.12.2003**
(21) Anmeldenummer: 03011681.8
(22) Anmeldetag: 23.05.2003
(51) Int. Cl.: F16C 17/26, F03D 11/00

(54) **Gleitlager mit integrierter Verzahnung**

(30) Priorität: 24.05.2002 DE 20208135 U
(71) Anmelder: AB SKF, S-415 50 Göteborg (SE)
(72) Erfinder: Kottwitz, Bernd, 66346 Püttlingen (DE); Löser, Norbert, 66346 Püttlingen (DE); Liesegang, Hans-Jürgen, 26419 Schortens (DE)
(74) Vertreter: Gosdin, Michael

(57) **Zusammenfassung**

Die Erfindung betrifft ein Gleitlager, vorzugsweise zur Lagerung eines Maschinenhauses (1) einer Windenergieanlage, mit einem ersten Lagerring (5) und einem zweiten Lagerring (13), die in einem gleitenden Kontakt zueinander stehen. Der erste Lagerring (5) oder der zweite Lagerring (13) weist eine Verzahnung zum Antrieb oder zur Arretierung des Gleitlagers auf. Die Besonderheit des erfindungsgemäßen Gleitlagers besteht darin, dass zur Ausbildung der Verzahnung am ersten Lagerring (5) oder am zweiten Lagerring (13) über den Umfang verteilt mehrere Antriebsbolzen (29) angeordnet sind.

## Beschreibung

Die Erfindung betrifft ein Gleitlager mit integrierter Verzahnung, insbesondere zur Lagerung eines Maschinenhauses einer Windenergieanlage.

Ein derartiges Gleitlager ist aus der DE 100 12 773 A1 bekannt. Das bekannte Gleitlager weist am Außenring eine Verzahnung auf, in die Ritzel eines Drehantriebs eingreifen.

Die gewünschte Übertragung einer Drehbewegung auf den Außenring des Gleitlagers, lässt sich mit der bekannten Anordnung in zufriedenstellender Weise realisieren. Allerdings entsteht ein erheblicher Aufwand, wenn die Verzahnung des Außenrings beschädigt wird, da dann der Außenring in der Regel komplett ausgetauscht werden muss. Dies gilt im besonderen Maß beim Einsatz des Gleitlagers in Anlagen, bei denen ein Lageraustausch extrem aufwendig ist, wie beispielsweise bei Windenergieanlagen.

Der Erfindung liegt daher die Aufgabe zugrunde, ein Gleitlager mit einer integrierten Verzahnung anzugeben, das über eine möglichst lange Betriebsdauer mit einem möglichst geringen Wartungsaufwand betrieben werden kann.

Diese Aufgabe wird durch die Merkmalskombination des Anspruchs 1 gelöst.

Das erfindungsgemäße Gleitlager dient vorzugsweise der Lagerung eines Maschinenhauses einer Windenergieanlage und weist einen ersten Lagerring und einen zweiten Lagerring auf, die in einem gleitenden Kontakt zueinander stehen. Der erste Lagerring oder der zweite Lagerring weist eine Verzahnung zum Antrieb oder zur Arretierung des Gleitlagers auf. Zur Ausbildung der Verzahnung sind im ersten Lagerring oder im zweiten Lagerring über den Umfang verteilt mehrere Antriebsbolzen angeordnet. Das erfindungsgemäße Gleitlager hat den Vorteil, dass die Antriebsbolzen kostengünstiger zu fertigen sind als beispielsweise eine in den Lagerring eingearbeitete Verzahnung.

Die Antriebsbolzen sind vorzugsweise einzeln austauschbar. Dies hat den Vorteil, dass bei einer Beschädigung eines oder mehrere Antriebsbolzen es lediglich erforderlich ist, diese betreffenden Antriebsbolzen auszutauschen. Der Lagerring und die restlichen Antriebsbolzen können dagegen weiter verwendet werden. Ein weiterer Vorteil besteht darin, dass der Austausch einzelner Antriebsbolzen im eingebauten Zustand des Gleitlagers möglich ist und somit auf einen extrem aufwendigen Austausch des Lagerrings verzichtet werden kann.

Die Antriebsbolzen können jeweils im Bereich wenigstens eines ihrer axialen Enden am ersten Lagerring oder am zweiten Lagerring fixiert sein. Vorzugsweise tauchen die Antriebsbolzen jeweils partiell in wenigstens eine Bohrung des ersten Lagerrings oder des zweiten Lagerrings ein. Insbesondere können die Antriebsbolzen jeweils partiell in eine Sacklochbohrung eintauchen. Diese Art der Fixierung der Antriebsbolzen ist zum einen kostengünstig realisierbar und ermöglicht zum anderen einen schnelleren Austausch der Antriebsbolzen.

Die Mantelfläche der Antriebsbolzen und/oder die Innenseiten der Bohrungen, in die die Antriebsbolzen eintauchen, können mit einer Beschichtung versehen sein, durch die Leichtgängigkeit der Antriebsbolzen in den Bohrungen gewährleistet wird. Diese Maßnahme erleichtert ebenfalls einen gegebenenfalls erforderlichen späteren Austausch der Antriebsbolzen.

Der erste Lagerring oder der zweite Lagerring kann zur Aufnahme der Antriebsbolzen bereichsweise einen U-förmigen Querschnitt aufweisen. Diese Ausbildung des Lagerrings hat den Vorteil, dass eine zuverlässige Fixierung der Antriebsbolzen gewährleistet ist, über die eine hohe Kraft übertragen werden kann.

Die Antriebsbolzen können mittels wenigstens eines Sicherungselements gegen Verschieben parallel zur Axialrichtung der Antriebsbolzen gesichert sein. Insbesondere kann das Sicherungselement jeweils als Seeger-Ring ausgebildet sein, der in eine umlaufende Nut im Antriebsbolzen eingreift. Ein derartiges Sicherungselement ist leicht zu entfernen und ermöglicht somit eine schnelle und einfache Montage oder Demontage der Antriebsbolzen.

Die Antriebsbolzen können jeweils einen axial durchgehenden Kanal aufweisen. Weiterhin können die Antriebsbolzen jeweils an einer axialen Endfläche einen Anschluss zur Einleitung eines Mediums in den Kanal des Antriebsbolzen aufweisen. Diese Ausbildung der Antriebsbolzen ermöglicht es, die Antriebsbolzen durch Einpressen beispielsweise eines Fetts in die Kanäle auf einfache Weise zu demontieren.

Vorzugsweise sind die Antriebsbolzen parallel zur Axialrichtung des Gleitlagers orientiert. Dadurch kann die Geometrie des angeordneten Ritzels, das in die Antriebsbolzen eingreift, relativ einfach gehalten werden und es ist möglich, hohe Antriebskräfte zu übertragen.

Die Erfindung wird nachstehend anhand der in der Zeichnung dargestellten Ausführungsbeispiele erläutert.

Es zeigen:
- Figur 1: ein Ausführungsbeispiel des erfindungsgemäßen Gleitlagers, das in einer Windenergieanlage montiert ist, in Schnittdarstellung,
- Figur 2: ein Gleitsegment in Aufsicht,
- Figur 3: eine ausschnittsweise Abbildung eines zweiten Ausführungsbeispiels des erfindungsgemäßen Gleitlagers in Schnittdarstellung und
- Figur 4: eine ausschnittsweise Abbildung eines dritten Ausführungsbeispiels des erfindungsgemäßen Gleitlagers in Schnittdarstellung.

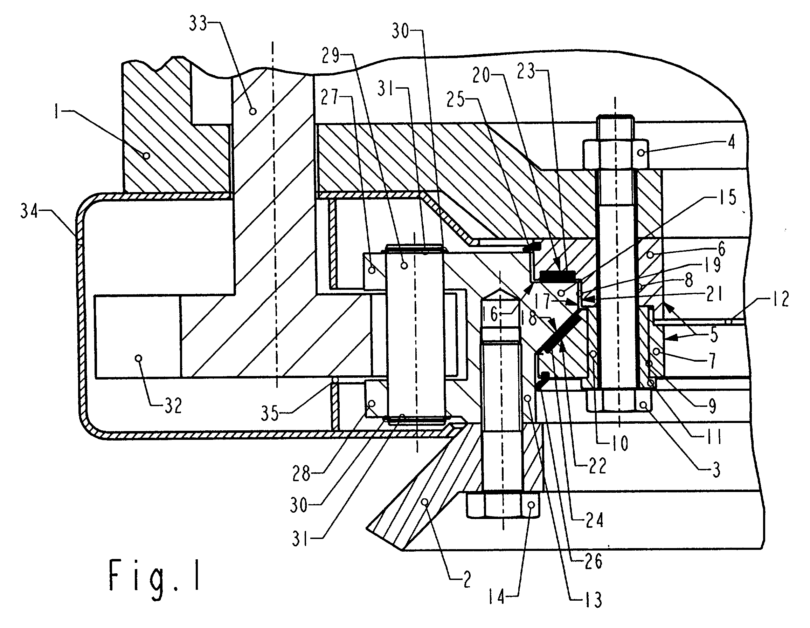

Figur 1 zeigt ein Ausführungsbeispiel des erfindungsgemäßen Gleitlagers eingebaut in eine Windenergieanlage in Schnittdarstellung. Bei dieser Anwendung wird ein Maschinenhaus 1 mit Hilfe des erfindungsgemäßen Gleitlagers auf einem Turm 2 drehbar abgestützt. Das Maschinenhaus 1 ist mittels Verbindungsschrauben 3 und Muttern 4 an einem Innenring 5 angeschraubt. Der Innenring 5 besteht aus einem ersten Ringteil 6 und einem zweiten Ringteil 7, die in Axialrichtung nebeneinander angeordnet sind und ebenfalls durch die Verbindungsschrauben 3 und Muttern 4 zusammengehalten werden. Hierzu sind die Verbindungsschrauben 3 durch entsprechende Durchgangsbohrungen 8 und 9 in den Ringteilen 6 und 7 geführt. Dabei weisen die Durchgangsbohrungen 9 im zweiten Ringteil 7 jeweils einen größeren Durchmesser als die Durchgangsbohrungen 8 im ersten Ringteil 6 aus. In die Durchgangsbohrungen 9 sind jeweils Buchsen 10 eingeführt, die an einem axialen Ende einen umlaufenden Kragen 11 aufweisen, der axial am zweiten Ringteil 7 anliegt. Das andere axiale Ende der Buchse 10 stützt sich jeweils axial am ersten Ringteil 6 ab, so dass abhängig von der Länge der Buchsen 10 ein axialer Spalt 12 zwischen dem ersten Ringteil 6 und dem zweiten Ringteil 7 ausgebildet wird.

Ein Außenring 13 ist über Schrauben 14 am Turm 2 befestigt. Der Außenring 13 weist einen umlaufenden Radialvorsprung 15 auf, der radial nach innen gerichtet ist. Der Radialvorsprung 15 weist eine senkrecht zur Axialrichtung des Gleitlagers orientierte Axialfläche 16, eine senkrecht zur Radialrichtung des Gleitlagers orientierte Radialfläche 17 und eine Kegelstumpffläche 18 auf, deren Mittelachse parallel zur Axialrichtung des Gleitlagers verläuft. Sämtliche Flächen verlaufen rotationssymmetrisch um die Achse des Gleitlagers. Der Radialvorsprung 15 greift in einen zwischen den Ringteilen 6 und 7 ausgebildeten Ringraum 19 ein, der von den Flächen 16, 17 und 18 gegenüberliegenden und komplementär dazu ausgebildeten Flächen 20, 21 und 22 begrenzt wird. Die Flächen 20 und 22 sind jeweils etwas zurückversetzt, so dass Vertiefungen zur Aufnahme von Gleitsegmenten 23 und 24 entstehen. Die Gleitsegmente 23 und 24 können beispielsweise auf die Flächen 20 und 22 aufgeklebt sein und stehen im gleitenden Kontakt zu der Axialfläche 16 und der Kegelstumpffläche 18. Dabei nimmt die Gleitpaarung bestehend aus den Gleitsegmenten 23 und der Axialfläche 16 im wesentlichen das Gewicht des Maschinenhauses 1 auf und die Gleitpaarung bestehend aus den Gleitsegmenten 24 und der Kegelstumpffläche 18 sichert das Maschinenhaus 1 gegen Kippen. Das Spiel in den beiden Gleitpaarungen hängt davon ab, wie stark das erste Ringteil 6 und das zweite Ringteil 7 des Innenrings 5 mit Hilfe der Verbindungsschrauben 3 einander angenähert sind. Da diese Annäherung durch die Buchsen 10 begrenzt wird, kann das Spiel über die Länge der Buchsen 10 vorgegeben bzw. eingestellt werden.

Um einen Austritt von gegebenenfalls im Bereich der Gleitsegmente 23 und 24 eingebrachten Schmierstoff zu verhindern, ist zwischen dem ersten Ringteil 6 und dem Außenring 13 eine erste Dichtung 25 angeordnet und zwischen dem zweiten Ringteil 7 und dem Außenring 13 eine zweite Dichtung 26.

Damit das Maschinenhaus 1 relativ zum Turm 2 geschwenkt werden kann, ist der Außenring 13 mit einer Triebstockverzahnung versehen. Hierzu weist der Außenring 13 einen U-förmigen Querschnitt auf, wobei das U radial nach außen geöffnet ist. Die beiden Schenkel 27 und 28 sind mit koaxialen Durchgangsbohrungen versehen, in die jeweils ein Triebstockbolzen 29 eingeführt ist. Die Triebstockbolzen 29 sind beidseitig axial durch je einen Seeger-Ring 30 gesichert, der in eine Nut 31 des Triebstockbolzens 29 eingreift. Die unteren Seeger-Ringe 30 können dabei gegebenenfalls auch entfallen, da die Triebstockbolzen 29 bereits durch ihr Gewicht gesichert sind. In die Triebstockbolzen 29 greift ein Ritzel 32 ein, das über eine Welle 33 angetrieben wird. Dabei können auch mehrere Ritzel 32 über den Umfang verteilt angeordnet sein. Neben seiner Antriebsfunktion kann jedes Ritzel 32 auch eine Bremsfünktion übernehmen und das Maschinenhaus 1 arretieren. Der Bereich des Triebstocks und des Ritzels 32 bzw. der Ritzel 32 ist von einer Abdeckung 34 umschlossen, die am Maschinenhaus 1 befestigt ist und jeweils bis auf einen kleinen Spalt an den Außenring 13 heranreicht. Im Bereich des Ritzels 32 bzw. der Ritzel 32 ist in der Abdeckung 34 jeweils eine Öffnung 35 vorgesehen, durch die hindurch das Ritzel 32 jeweils in die Triebstockverzahnung eingreifen kann. Die Abdeckung 34 dient dazu, den im Bereich der Triebstockverzahnung vorgehaltenen Schmierstoff zurückzuhalten und so einem Schmierstoffverlust und einer Verschmutzung der umgebenden Maschinenteile vorzubeugen.

Der Austausch eines Triebstockbolzens 29 kann je nach Einbauumgebung wahlweise von einer der Axialseiten des Außenrings 13 erfolgen, d. h. in der Darstellung der Figur 1 entweder von oben oder von unten. Bei einem Austausch von oben wird eine dafür vorgesehene figürlich nicht dargestellte Wartungsöffnung im Maschinenhaus 1 und in der Abdeckung 34 durch Verdrehen des Maschinenhauses 1 mit dem auszutauschenden Triebstockbolzen 29 zur Deckung gebracht. Falls der Triebstockbolzen 29, wie in Figur 1 dargestellt, durch einen unteren Seeger-Ring 30 gesichert ist, ist in der Abdeckung 34 und optional auch in Turm 2 eine Zugangsmöglichkeit zu diesem unteren Seeger-Ring 30 vorgesehen, die ein Lösen des unteren Seeger-Rings 30 ermöglicht. Nach dem Lösen des unteren Seeger-Rings 30 kann der Triebstockbolzen 29 nach oben aus den Schenkeln 27 und 28 des Außenrings 13 herausgezogen werden und ein neuer Triebstockbolzen 29 kann von oben eingeführt werden und durch einen oberen und gegebenenfalls durch einen unteren Seeger-Ring 30 gesichert werden. Das Austauschen eines Triebstockbolzens 29 setzt somit lediglich voraus, dass das Maschinenhaus 1 in eine definierte Position relativ zum Turm 2 geschwenkt wird. Eine Demontage des Gleitlagers oder von Teilen davon ist dagegen nicht erforderlich. Noch einfacher ist der Austausch, wenn kein unterer Seeger-Ring 30 vorhanden ist, da dann der Schritt des Lösens des unteren Seeger-Rings 30 entfällt und auch keine Zugänglichkeit zu diesem Bereich gewährleistet sein muss. Falls sich das im Bezug auf die Einbauumgebung anbietet ist es prinzipiell auch möglich, den Triebstockbolzen 29 von unten zu demontieren bzw. zu montieren. Hierzu ist dann in entsprechender Weise der obere Seeger-Ring 30 zu lösen.

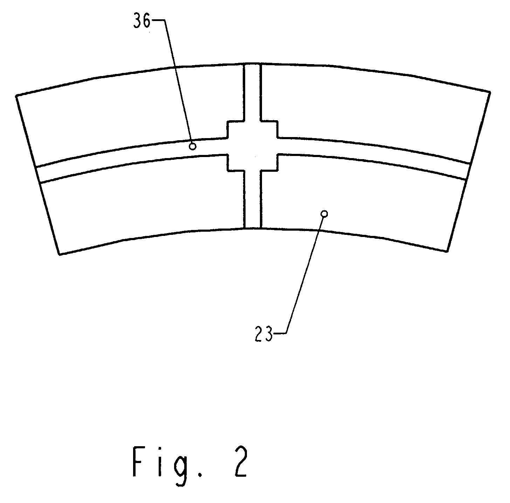

Figur 2 zeigt eine Aufsicht auf ein Gleitsegment 23. Die Gleitsegmente 24 sind entsprechend aufgebaut und besitzen nur eine geringfügig andere Form. Das Gleitsegment 23 kann aus einem Kunststoffmaterial bestehen und mit oder ohne Schmierstoff eingesetzt werden. Um die Verteilung des Schmierstoffs und dessen Deponierung im Bereich der Gleitflächen zu fördern, weist das Gleitsegment 23 Vertiefungen 36 auf. Die Befestigung des Gleitsegments 23 kann durch Kleben und/oder Verschrauben erfolgen. Hierzu ist das Gleitsegment 23 auf seiner Rückseite entsprechend aufgerauht bzw. weist das Gleitsegment 23 entsprechende Bohrungen auf. Statt des abgebildeten Gleitsegments 23 könnte auch prinzipiell ein durchgehender Gleitbelag verwendet werden. In der Regel ist das Handling einzelner Gleitsegmente 23 jedoch einfacher als das eines durchgehenden Gleitbelags. Dies gilt auch im Hinblick auf die Gleitsegmente 24.

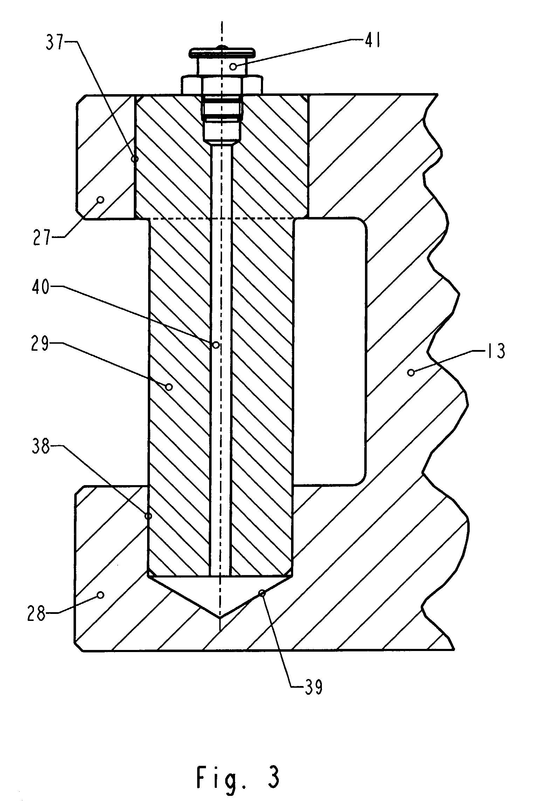

Figur 3 zeigt eine ausschnittsweise Abbildung eines zweiten Ausführungsbeispiels des erfindungsgemäßen Gleitlagers in Schnittdarstellung. Das zweite Ausführungsbeispiel unterscheidet sich von dem in Figur 1 dargestellten ersten Ausführungsbeispiel hinsichtlich der Ausbildung und der Fixierung der Triebstockbolzen 29. Der dargestellte Ausschnitt beschränkt sich daher auf den Bereich, in dem die Triebstockbolzen 29 angeordnet sind.

Auch beim zweiten Ausführungsbeispiel weist der Außenring 13 im Bereich der Triebstockverzahnung einen U-förmigen Querschnitt auf. Zur Aufnahme und Fixierung der Triebstockbolzen 29 ist der Schenkel 27 pro Triebstockbolzen 29 mit einer axial verlaufenden Durchgangsbohrung 37 versehen. Der Schenkel 28 weist Sacklochbohrungen 38 auf, die koaxial zu den Durchgangsbohrungen 37 angeordnet sind und jeweils einen kegelförmig ausgebildeten Boden 39 besitzen. In jede Durchgangsbohrung 37 und die jeweils zugehörige Sacklochbohrung 38 ist je ein Triebstockbolzen 29 eingesetzt. Die axiale Fixierung der Triebstockbolzen 29 kann durch die Schwerkraft erfolgen oder dadurch, dass die Triebstockbolzen 29 jeweils mit einer radialen Überdeckung in die Durchgangsbohrungen 37 und/oder in die Sacklochbohrungen 38 eingepresst werden. Um eine einfache Montage zu ermöglichen, wird der Bohrungsdurchmesser der Durchgangsbohrung 37 größer gewählt als der Bohrungsdurchmesser der Sachlochbohrung 38. Entsprechend weisen die Triebstockbolzen 29 in ihren axialen Endbereichen unterschiedliche Durchmesser auf. Jeder Triebstockbolzen verfügt über einen axial durchgehenden Kanal 40, der von einem Schmiernippel 41 an einem Ende des Triebstockbolzens 29 ausgeht und am anderen Ende des Triebstockbolzens 29 im Bereich des kegelförmigen Bodens 39 mündet. Über den Schmiernippel 41 kann jeweils Fett in den Kanal 40 gepresst werden, dass sich im Bereich des kegelförmig ausgebildeten Bodens 39 sammelt, so dass der Triebstockbolzen 29 mit Hilfe des Fetts aus der Sacklochbohrung 38 und damit auch aus der Durchgangsbohrung 37 herausgepresst werden kann. Um jeweils ein vollständiges Auspressen zu ermöglichen, wird der axiale Überlapp des Triebstockbolzens 29 mit der Sacklochbohrung 38 größer gewählt als mit der Durchgangsbohrung 37.

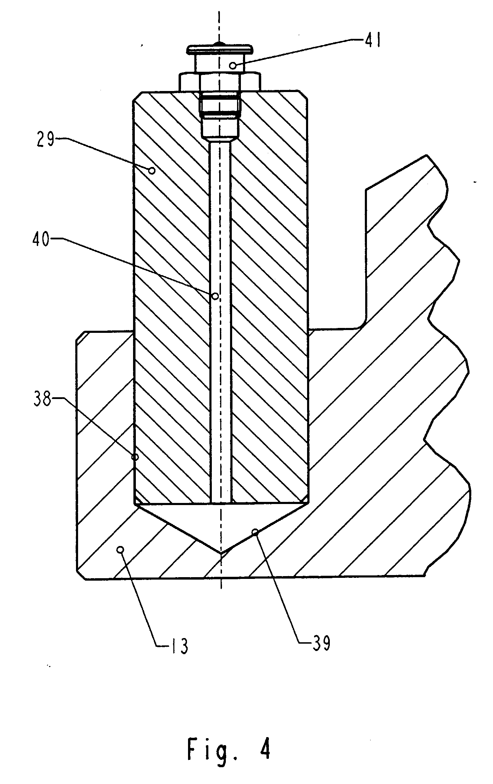

Figur 4 zeigt eine ausschnittsweise Abbildung eines dritten Ausführungsbeispiels des erfindungsgemäßen Gleitlagers in Schnittdarstellung. Es wurde der gleiche Ausschnitt gewählt, wie in Figur 3. Die Besonderheit beim dritten Ausführungsbeispiel besteht darin, dass die Triebstockbolzen 29 fliegend gelagert sind, d. h. sie jeweils nur mit einem axialen Ende am Außenring 13 fixiert sind. Es ist somit nicht erforderlich, dass der Außenring 13 einen U-förmigen Querschnitt aufweist, sondern es kann eine beliebige Querschnittsform gewählt werden. Zur Aufnahme und Fixierung der Triebstockbolzen 29 sind wiederum Sacklochbohrungen 38 vorgesehen, die in entsprechender Weise wie beim zweiten AusführungsbeispieL ausgebildet sind. Die Triebstockbolzen 29 verfügen wiederum über je einen Kanal 40 und je einen Schmiernippel 41, um ein Auspressen der Triebstockbolzen 29 zu ermöglichen. Um einen sicheren Sitz der Triebstockbolzen 29 in den Sacklochbohrungen 38 zu gewährleisten, sind diese jeweils mit einer radialen Überdeckung eingepresst. Entsprechend dem zweiten Ausführungsbeispiel erfolgt auch beim dritten Ausführungsbeispiel die Demontage der Triebstockbolzen 29 durch Einpressen von Fett über die Schmiernippel 41 in die Kanäle 40.

Neben der beschriebenen axialen Orientierung der Triebstockbolzen 29 können die Triebstockbolzen 29 auch in Radialrichtung oder auch in einer dazwischen liegenden Richtung orientiert sein. Entsprechend ist dann jeweils die Orientierung jedes Ritzels 32 angepasst.

Allen Ausführungsbeispiel ist gemeinsam, dass jeder Triebstockbolzen 29 ohne Demontage des Gleitlagers einzeln ausgetauscht werden kann. Wenn ein oder mehrere Triebstockbolzen beschädigt oder verschlissen sind, können diese somit mit einem relativ geringen Aufwand ausgetauscht werden. Der Außenring kann dagegen an seinem Platz bleiben und weiter verwendet werden.

### Bezugszeichen

- 1: Maschinenhaus
- 2: Turm
- 3: Verbindungsschraube
- 4: Mutter
- 5: Innenring
- 6: erstes Ringteil (Innenring 5)
- 7: zweites Ringteil (Innenring 5)
- 8: Durchgangsbohrung (erstes Ringteil 6)
- 9: Durchgangsbohrung (zweites Ringteil 7)
- 10: Buchse
- 11: Kragen
- 12: Spalt
- 13: Außenring
- 14: Schraube
- 15: Radialvorsprung (Außenring 13)
- 16: Axialfläche (Außenring 13)
- 17: Radialfläche (Außenring 13)
- 18: Kegelstumpffläche (Außenring 13)
- 19: Ringraum
- 20: Axialfläche (erstes Ringteil 6)
- 21: Radialfläche (erstes Ringteil 6)
- 22: Kegelstumpffläche (zweites Ringteil 7)
- 23: Gleitsegment
- 24: Gleitsegment
- 25: Dichtung
- 26: Dichtung
- 27: erster Schenkel (Außenring 13)
- 28: zweiter Schenkel (Außenring 13)
- 29: Triebstockbolzen
- 30: Seeger-Ring
- 31: Nut (Triebstockbolzen 29)
- 32: Ritzel
- 33: Welle
- 34: Abdeckung
- 35: Öffnung
- 36: Vertiefung (Gleitbelag 23)
- 37: Durchgangsbohrung für Triebstockbolzen 29
- 38: Sacklochbohrung für Triebstockbolzen 29
- 39: Boden der Sacklockbohrung 38
- 40: Kanal
- 41: Schmiernippel

## Patentansprüche

1. Gleitlager, vorzugsweise zur Lagerung eines Maschinenhauses (1) einer Windenergieanlage, mit einem ersten Lagerring (5) und einem zweiten Lagerring (13), die in einem gleitendem Kontakt zueinander stehen, wobei der erste Lagerring (5) oder der zweite Lagerring (13) eine Verzahnung zum Antrieb oder zur Arretierung des Gleitlagers aufweist, **dadurch gekennzeichnet, dass** zur Ausbildung der Verzahnung am ersten Lagerring (5) oder am zweiten Lagerring (13) über den Umfang verteilt mehrere Antriebsbolzen (29) angeordnet sind.

2. Gleitlager nach Anspruch 1, **dadurch gekennzeichnet, dass** die Antriebsbolzen (29) einzeln austauschbar sind.

3. Gleitlager nach einem der vorhergehenden Ansprüche, **dadurch gekennzeichnet, dass** die Antriebsbolzen (29) jeweils im Bereich wenigstens eines ihrer axialen Enden am ersten Lagerring (5) oder am zweiten Lagerring (13) fixiert sind.

4. Gleitlager nach einem der vorhergehenden Ansprüche, **dadurch gekennzeichnet, dass** die Antriebsbolzen (29) jeweils partiell in wenigstens eine Bohrung (37, 39) des ersten Lagerrings (5) oder des zweiten Lagerrings (13) eintauchen.

5. Gleitlager nach Anspruch 4, **dadurch gekennzeichnet, dass** das die Antriebsbolzen (29) jeweils partiell in eine Sacklochbohrung (38) eintauchen.

6. Gleitlager nach einem der vorhergehenden Ansprüche, **dadurch gekennzeichnet, dass** die Mantelflächen der Antriebsbolzen (29) und/oder die Innenseiten der Bohrungen (37, 38), in die die Antriebsbolzen (29) eintauchen, mit einer Beschichtung versehen sind, durch die eine Leichtgängigkeit der Antriebsbolzen (29) in den Bohrungen (37, 38) gewährleistet wird.

7. Gleitlager nach einem der vorhergehenden Ansprüche, **dadurch gekennzeichnet, dass** der erste Lagerring (5) oder der zweite Lagerring (13) zur Aufnahme der Antriebsbolzen (29) bereichsweise einen U-förmigen Querschnitt aufweist.

8. Gleitlager nach einem der vorhergehenden Ansprüche, **dadurch gekennzeichnet, dass** die Antriebsbolzen (29) mittels wenigstens eines Sicherungselements (30) gegen Verschieben parallel zur Axialrichtung der Antriebsbolzen (29) gesichert sind.

9. Gleitlager nach Anspruch 8, **dadurch gekennzeichnet, dass** das Sicherungselement (30) jeweils als Seeger-Ring ausgebildet ist, der in eine umlaufende Nut (31) im Antriebsbolzen (29) eingreift.

10. Gleitlager nach einem der vorhergehenden Ansprüche, **dadurch gekennzeichnet, dass** die Antriebsbolzen (29) jeweils einen axial durchgehenden Kanal (40) aufweisen.

11. Gleitlager nach Anspruch 10, **dadurch gekennzeichnet, dass** die Antriebsbolzen (29) jeweils an einer axialen Endfläche einen Anschluss (41) zur Einleitung eines Mediums in den Kanal (40) des Antriebsbolzens (29) aufweisen.

12. Gleitlager nach einem der vorhergehenden Ansprüche, **dadurch gekennzeichnet, dass** die Antriebsbolzen (29) wenigstens zwei axiale Bereiche unterschiedlichen Durchmessers aufweisen.

13. Gleitlager nach einem der vorhergehenden Ansprüche, **dadurch gekennzeichnet, dass** die Antriebsbolzen (29) parallel zur Axialrichtung des Gleitlagers orientiert sind.
